# Europäisches Patentamt
## European Patent Office
## Office européen des brevets

(19)

(11) Veröffentlichungsnummer: **0 041 937**
**B1**

(12)

# EUROPÄISCHE PATENTSCHRIFT

(45) Veröffentlichungstag der Patentschrift:
**13.11.85**

(51) Int. Cl.⁴: **C 08 L 23/16, C 08 L 23/08**

(21) Anmeldenummer: **81890073.0**

(22) Anmeldetag: **05.05.81**

(54) **Thermoplastischer Werkstoff.**

(30) Priorität: **14.05.80 AT 2580/80**

(43) Veröffentlichungstag der Anmeldung:
**16.12.81 Patentblatt 81/50**

(45) Bekanntmachung des Hinweises auf die Patenterteilung:
**13.11.85 Patentblatt 85/46**

(84) Benannte Vertragsstaaten:
**AT CH DE IT LI NL**

(56) Entgegenhaltungen:
**DE - A - 1 694 572**
**US - A - 3 386 925**
**US - A - 3 406 127**
**US - A - 3 489 710**

(73) Patentinhaber: **Semperit Aktiengesellschaft,
Modecenterstrasse 22, A-1031 Wien (AT)**

(72) Erfinder: **Horn, Peter, Kreuzäckergasse 13,
A-2633 Pottschach (AT)**
Erfinder: **Niel, Reinfried, Dipl.-Ing., Mollram 86,
A-2620 Neunkirchen (AT)**
Erfinder: **Wanlek, Kurt, Dipl.-Ing., Wintergasse 29-31,
A-3002 Purkersdorf (AT)**

## Beschreibung

Die Erfindung betrifft einen thermoplastischen Werkstoff aus einer Mischung eines thermoplastischen Kunststoffes mit Gummiteilchen, wobei der thermoplastische Kunststoff ein Olefin-Vinylazetat-Copolymer ist und die Gummiteilchen aus gemahlenem Abfall und/oder Altgummi aus vulkanisiertem Äthylen-Propylen-Terpolymerkautschuk bestehen, deren Anteil bis zu 70, vorzugsweise bis zu 50 Gewichtsprozent beträgt.

Im Zuge von Bemühungen zur Wiederverwertung von Altgummi ist es bereits bekannt geworden (z. B. DD-PS 137 938) einem Kunststoff auf Polyäthylen-Basis zerkleinerten Altgummi zuzusetzen. Man erhält dadurch einen Werkstoff, der durch Veränderung des Mischungsverhältnisses zwischen dem Kunststoff und den Gummianteilen dem jeweiligen Einsatzgebiet bezüglich seiner Eigenschaften angepaßt werden kann. Der Nachteil dieses bekannten Werkstoffes besteht aber darin, daß mit zunehmendem Gummianteil die mechanischen Eigenschaften eines derartigen Werkstoffes rasch abnehmen.

Ein thermoplastischer Werkstoff, welcher aus einer Mischung eines thermoplastischen Kunststoffes mit Gummiteilchen besteht, ist aus der US-PS 3 489 710 bekannt. Hierbei kann der thermoplastische Kunststoff ein Olefin-Vinylazetat-Copolymer sein, die Gummiteilchen können aus vulkanisiertem Äthylen-Propylen-Terpolymerkautschuk bestehen. In der US-PS 3 406 127 ist ebenfalls ein Werkstoff aus einer Mischung eines thermoplastischen Elastomers mit vulkanisierten Gummiteilchen, beispielsweise zerkleinerten Altgummiteilchen beschrieben, wobei als thermoplastisches Elastomer auch ein Vinylazetat-Copolymer vorgeschlagen wird.

Die vorliegende Erfindung hat sich daher die Schaffung eines thermoplastischen Werkstoffs mit einem Anteil an Gummiteilchen zum Ziel gesetzt, bei dem die Gummiteilchen nicht nur einen quasi inaktiven Füllstoff darstellen, sondern ihre charakteristischen Gummieigenschaften auch innerhalb des Werkstoffs entfalten können, so daß dessen Eigenschaften dadurch günstig beeinflußt werden.

Dies wird erfindungsgemäß dadurch erreicht, daß der Vinylazetatanteil des Olefin-Vinylazetat-Copolymers etwa 10 bis 15% beträgt.

Überraschenderweise hat sich herausgestellt, daß sich ein derartiger Werkstoff weitgehend wie ein homogener Thermoplast verhält, und daß seine mechanischen Eigenschaften durch die Gummiteilchen nicht in dem Maß beeinflußt werden, wie allein aus dem Mischungsverhältnis Kunststoff zu Gummiteilchen zu erwarten wäre.

Vielmehr ergibt sich offensichtlich durch die nahe chemische Verwandtschaft der Polyolefinmakromoleküle des thermoplastischen Kunststoffes zu dem Äthylen-Propylenanteil des Terpolymerkautschuks die Möglichkeit zu einer physikalisch-chemischen Wechselwirkung, die zu synergistischen Effekten führt.

Von besonderer Bedeutung des Eigenschaftsverhaltens ist die Anwesenheit von Vinylazetat als Bestandteil des thermoplastischen Kunststoff-Copolymers, da erst dadurch die außerordentlich günstigen Resultate (geringer Abfall der mechanischen Werte, z. B. Shore-A Härteabfall von 90—91 auf 87—90; Elastizitätsabfall von 28% auf 26%) erreichbar ist. Der dabei eintretende Effekt ist nicht ohne weiteres erklärbar und hängt möglicherweise mit der Polarität der Vinylazetatgruppierung zusammen, die sich besonders günstig auf die Wechselwirkung zu den vulkanisierten Gummiteilchen aus Äthylen-Propylen-Terpolymerkautschuk (=EPDM) auswirken.

Tabelle 1 zeigt das Verhalten einer Reihe von mechanischen Eigenschaften EPDM-Gummimehl/Äthylen-Vinylazetet-Copolymer-Verschnitten in Abhängigkeit von der Mischungszusammensetzung und im Vergleich zu analogen Mischungen mit Naturkautschuk-Styrolbutadienkautschuk-Gummimehl. Der Tabelle ist zu entnehmen, daß die gemessenen mechanischen Prüfwerte bei Mischungen Lupolen/EPDM-Gummimehl zwar gegenüber dem reinen Lupolen schlechter werden, gegenüber dem NK-SBR-Gummimehl/Lupolen-Mischungen aber besser sind. Insbesondere liegen Zugfestigkeit, Weiterreißfestigkeit und Nadelausreißwiderstand höher. Die Härte bleibt ebenfalls höher und ist im Verhältnis zum EPDM-Gummimehlanteil — ebenso wie auch der Druckverformungsrest — wesentlich konstanter. Besonders günstig ist auch die größere Abriebfestigkeit.

**0 041 937**

Tabelle 1

| Lupolen 3510 K[5)] 85% PE[1)] 15% VA[2)] | % | 100 | 80 | 60 | 40 | 20 | 80 | 60 | 40 | 20 |
|---|---|---|---|---|---|---|---|---|---|---|
| Gummimehl EPDM[3)] | % | — | 20 | 40 | 60 | 80 | — | — | — | — |
| Gummimehl NK—SBR[4)] | % | — | — | — | — | — | 20 | 40 | 60 | 80 |
| Zugfestigkeit nach DIN 53504 | daN/cm$^2$ | 102 | 63 | 50 | 47 | 45 | 56 | 37 | 25 | 15 |
| Shore-A Härte nach DIN 53503 | — | 88 | 87 | 84 | 82 | 77 | 85 | 79 | 70 | 60 |
| Weiterreißfestigkeit nach DIN 53507 | daN/cm | 30 | 30 | 22 | 15 | 8 | 26 | 18 | 12 | 8 |
| Nadelausreißwiderstand nach DIN 53506 | daN/cm | 47 | 41 | 38 | 29 | 25 | 39 | 28 | 20 | 13 |
| Abrieb nach DIN 53516 | mm$^3$ | 30 | 45 | 70 | 150 | 330 | 55 | 105 | 270 | 540 |
| Druckverformungsrest nach DIN 53517 | % | 28/8 | 34/4 | 34/8 | 38/9 | 49/10 | 26/5 | 44/9 | 63/12 | 85/14 |

[1)] PE = Polyäthylenanteil
[2)] VA = Vinylazetatanteil
[3)] EPDM = Äthylen-propylen-terpolymerisat
[4)] NK—SBR = Gummimischung aus Naturkautschuk und Styrol-butadienkautschuk
[5)] eingetragenes Warenzeichen der Badischen Anilin und Sodafabrik (BASF), BRD

Ein besonders vorteilhafter Verwendungszweck des erfindungsgemäßen thermoplastischen Werkstoffes liegt in der Herstellung sogenannter Schienenunterlagsplatten. Es handelt sich dabei um rechteckige Plättchen von etwa 5 mm Höhe, die zwischen Schienen und Schienentragplatte angeordnet werden. Diese Schienenunterlagsplatten sollen schwingungsdämpfend wirken und verhindern, daß allzugroße Stoßbelastungen im System Rad/Schiene/Schwelle auftreten. Derartige Schienenunterlagsplatten wurden früher aus Holz gefertigt und werden zur Zeit auch aus reinem Äthylen-Vinylazetat-Copolymer hergestellt. Dieses Material weist die für diesen Zweck erforderliche Dämpfung dann auf, wenn der Vinylazetatanteil des Copolymers etwa 10—15% beträgt. Es hat sich gemäß der vorliegenden Erfindung als wesentlich herausgestellt, wenn für den Anwendungsfall als Schienenunterlagsplättchen der thermoplastische Werkstoff ebenfalls einen Kunststoff enthält, der 10—15% Vinylazetatanteil besitzt. Auch in diesem Fall kann festgestellt werden, daß durch die Beimischung der Gummiteilchen aus vulkanisiertem Äthylen-Propylen-Terpolymerkautschuk die mechanischen Eigenschaften nicht wesentlich verschlechtert werden, sondern daß das Eigenschaftsniveau im wesentlichen erhalten werden kann. Die Wirtschaftlichkeit des erfindungsgemäßen Werkstoffs liegt jedoch erheblich über dem Reinkunststoff, insbesondere wenn Abfall-Gummiteilchen eingesetzt werden können.

Um die Homogenität des thermoplastischen Werkstoffes zu gewährleisten, ist es zweckmäßig, wenn der vulkanisierte Äthylen-Propylen-Terpolymerkautschuk eine Shore-A Härte von 60—90°, vorzugsweise 60—70° aufweist. Diese Shore-A Härten liegen etwas unter den Shore-A Härten des reinen Polyolefin-Vinylazetat-Copolymers, dessen Shore-A Härte etwa zwischen 94 und 97° liegt.

Es hat sich überraschenderweise herausgestellt, daß die Festigkeit des thermoplastischen Werkstoffes nicht erheblich dadurch beeinträchtigt wird, wenn die beigemengten Gummiteilchen eine Shore-A Härte von beispielsweise 60—70° aufweisen, obwohl man in der Regel davon auszugehen hat, daß die Festigkeit eines Kunststoff- oder Gummigemenges dann stark abnimmt, wenn die Härten Gemengeanteile stark voneinander differieren. Offensichtlich liegt im vorliegenden Fall eine derartige stabile physikalische und physikalisch-chemische Wechselwirkung der Mischungsbestandteile vor, daß die zitierten nachteiligen Effekte nicht oder nur in geringem Maße auftreten können.

Abhängig vom Einsatzzweck des thermoplastischen Werkstoffs ist es erfindungsgemäß wesentlich, daß der Anteil an Gummiteilchen bis zu 70, vorzugsweise bis zu 50 Gewichtsprozent beträgt. Auch bei großen Anteilen an Gummiteilchen ist eine Verarbeitung des Werkstoffs durch Pressen, Spritzgießen, Extrudieren od. dgl. weitestgehend möglich.

Zweckmäßig ist es gemäß der vorliegenden Erfindung, wenn die Gummiteilchen eine Korngröße

3

von 200–1000 µm, vorzugsweise von 400 bis 800 µm besitzen. Diese relativ große Korngröße der Gummiteilchen trägt wesentlich zur Wirtschaftlichkeit der thermoplastischen Mischung bei, da bekanntlich bei größerem Feinheitsgrad der Mahlaufwand exponentiell ansteigt. Dies trifft insbesondere auf das Mahlen von Gummi zu, wo ein erheblicher Anteil der Mahlenergie durch Verformungsarbeit verlorengeht. Wenn andererseits die Größe der Gummiteilchen über 1000 µm ansteigt, so ergeben sich im Werkstoff bereits relativ große heterogene Bezirke, die zu örtlichen Abweichungen vom statistischen Eigenschaftsbild führen können.

Im Rahmen der Erfindung bestehen die Gummiteilchen im thermoplastischen Werkstoff aus gemahlenem Abfall- und/oder Altgummi. Auf diese Weise ist gleichzeitig mit der Verbilligung des thermoplastischen Werkstoffs auch eine weitere Verwendungsmöglichkeit für Abfall- und/oder Altgummi geschaffen. Die in Frage kommenden Altgummiquellen sind insbesondere Dichtungen aus dem Bausektor, wo Äthylen-Propylen-Terpolymerkautschuk wegen seiner guten Witterungs- und UV-beständigkeit zum Einsatz gelangt.

Eine Eigenschaftsverbesserung gegenüber reinem thermoplastischem Kautschuk ist bezüglich des Durchgangswiderstandes zu erzielen, wobei bei Einsatz entsprechend leitfähige Ruße enthaltender Gummiteilchen eine Erniedrigung des Durchgangswiderstandes um einige Zehnerpotenzen erreichbar ist. Diese Erniedrigung des spezifischen Durchgangswiderstandes kann durch Einsatz geeigneter Gummimehle so weit gesteigert werden, daß man einen billigen Thermoplast mit antistatischen Eigenschaften erreicht.

Neben der möglichen Erhöhung der elektrischen Leitfähigkeit kann durch den Gummimehlzusatz auch die Wärmeleitfähigkeit von Thermoplasten erhöht werden, ohne daß dabei die mechanischen Eigenschaften nennenswert beeinträchtigt werden.

Eine weitere Eigenschaft dieser gummimehlhaltigen, thermoplastischen Mischung ist die hohe Abriebfestigkeit, welche bei einem Gummimehlzusatz von 50% immer noch im Bereich von sehr guten Schuhsohlen und Absatzqualitäten liegt. Außerdem hinterlassen solche schwarze Schuhsohlen auch nicht die unliebsamen schwarzen Abschmierspuren auf hellen Fußböden. Die geringe Quellbarkeit in Spindelöl, Speiseöl und Lösungsmitteln wie Äthylazetat und Benzin machen diese Äthylen-Vinylazetat-Copolymerverschnitte mit EPDM-Gummimehl auch besonders geeignet für Sohlen und Absätze von Arbeitsschuhen (s. Tabelle 2).

Mögliche weitere Einsatzgebiete für thermoplastische Werkstoffe gemäß der Erfindung sind schall- und schwingungsdämpfende Unterlagen. Daneben kann der thermoplastische Werkstoff auch überall dort eingesetzt werden, wo es nicht auf die farbliche Gestaltung, sondern auf einen günstigen Preis ankommt. Beispielsweise kann man Behälter, Rohre od. dgl. daraus herstellen.

Tabelle 2

Quellverhalten von Äthylen-Vinylazetat-Copolymer

| | | | | | | | | |
|---|---|---|---|---|---|---|---|---|
| Lupolen 3510 K[1]) | 100,— | | 75,— | | 66,— | | 50,— | |
| Protektormehl[2])<br>1000 µm | — | | 25,— | | 34,— | | 50,— | |
| Summe: | 100,— | | 100,— | | 100,— | | 100,— | |
| 20°C | Vol.%<br>3 Tage | 7 Tage | Vol.%<br>3 Tage | 7 Tage | Vol.%<br>3 Tage | 7 Tage | Vol.%<br>3 Tage | 7 Tage |
| Benzin | +44,2 | +42,5 | +51,4 | +48,7 | + 52,4 | + 49,9 | + 60,5 | + 58,1 |
| Toluol | +81,5 | +79,2 | +98,5 | +97,4 | +105,2 | +104,8 | +120,6 | +120,1 |
| Spindelöl | + 1,6 | + 2,6 | + 2,9 | + 4,9 | + 3,4 | + 5,9 | + 5,8 | + 9,4 |
| Äthylacetat | +12,7 | +13,0 | +17,4 | +15,6 | + 18,7 | + 17,1 | + 21,6 | + 19,8 |
| Speiseöl | − 0,4 | − 0,3 | 0 | + 0,3 | + 0,1 | + 0,3 | + 0,5 | + 1,0 |

[1]) Eingetragenes Warenzeichen der Fa. BASF, BRD
[2]) Protektormehl = Gummimehl, erhalten durch Mahlen von Reifenlaufflächen und Altreifen

**0 041 937**

**Patentansprüche**

1. Thermoplastischer Werkstoff aus einer Mischung eines thermoplastischen Kunststoffes mit Gummiteilchen, wobei der thermoplastische Kunststoff ein Olefin-Vinylazetat-Copolymer ist und die Gummiteilchen aus gemahlenem Abfall- und/oder Altgummi aus vulkanisiertem Äthylen-Propylen-Terpolymerkautschuk bestehen, deren Anteil bis zu 70, vorzugsweise bis zu 50 Gewichtsprozent beträgt, dadurch gekennzeichnet, daß der Vinylazetatanteil des Olefin-Vinylazetat-Copolymers etwa 10 bis 15% beträgt.

2. Werkstoff nach Anspruch 1, dadurch gekennzeichnet, daß der vulkanisierte Äthylen-Propylen-Terpolymerkautschuk eine Shore-A Härte von etwa 60 bis 90°, vorzugsweise 60 bis 70° aufweist.

3. Werkstoff nach Anspruch 1 oder 2, dadurch gekennzeichnet, daß die Gummiteilchen eine Korngröße von 200 bis 1000 µm, vorzugsweise 400 bis 800 µm besitzen.

**Claims**

1. A thermoplastic material consisting of a mixture of a thermoplastic synthetic resin with rubber particles, where the thermoplastic synthetic resin is an olefine-vinyl acetate copolymer and the rubber particles consist of ground waste and/or used rubber made of vulcanized ethylene-propylene-terpolymer rubber, the proportion of which is up to 70%, preferably 50%, by weight, characterised in that the vinyl acetate component of the olefine-vinyl acetate copolymer is about 10 to 15%.

2. A material as claimed in Claim 1, characterised in that the vulcanized ethylene-propylene-terpolymer rubber has a Shore-A hardness of about 60 to 90°, preferably 60 to 70°.

3. A material as claimed in Claim 1 or Claim 2, characterised in that the rubber particles have a grain size of 200 to 1000 µm, preferably 400 to 800 µm.

**Revendications**

1. Matériau thermoplastique constitué par une matière synthétique thermoplastique avec des particules de caoutchouc, dans lequel la matière synthétique thermoplastique est un copolymère d'oléfine et d'acétate de vinyle et les particules de caoutchouc sont constituées par des déchets de caoutchouc ou du caoutchouc vieux moulus constitués de caoutchouc éthylène-propylène-terpolymère vulcanisé, dont la proportion peut atteindre jusqu'à 70, de préférence jusqu'à 50% en poids, caractérisé par le fait que la proportion d'acétate de vinyle dans le copolymère d'oléfine et d'acétate de vinyle est d'environ 10 à 15%.

2. Matériau selon la revendication 1, caractérisé par le fait que le caoutchouc éthylène-propylène-terpolymère vulcanisé présente une dureté Shore-A d'environ 60 à 90°, de préférence de 60 à 70°.

3. Matériau selon la revendication 1 ou 2, caractérisé par le fait que les particules de caoutchouc ont une granulométrie de 200 à 1000 µm, de préférence de 400 à 800 µm.